(19) Europäisches Patentamt
European Patent Office
Office européen des brevets

(11) Publication number: 0 086 159
B1

# (12) EUROPEAN PATENT SPECIFICATION

(45) Date of publication of patent specification: 23.04.86

(51) Int. Cl.⁴: C 08 F 255/00, C 08 F 8/44

(21) Application number: 83400265.1

(22) Date of filing: 08.02.83

## (54) Method for improving the characteristics under heat of polyolefines.

(30) Priority: 10.02.82 IT 1955182

(43) Date of publication of application: 17.08.83 Bulletin 83/33

(45) Publication of the grant of the patent: 23.04.86 Bulletin 86/17

(84) Designated Contracting States: AT BE DE FR GB NL SE

(56) References cited:
FR-A-1 514 673
FR-A-2 315 519
FR-E- 87 183

(73) Proprietor: Montedison S.p.A.
31, Foro Buonaparte
I-20121 Milan (IT)

(72) Inventor: Garagnani, Enea
9 Vis Iolanda Bonfieni
Ferrara (IT)
Inventor: Moro, Alessandro
1 via Don P. Mazzolari
Occhibello (Rovigo) (IT)
Inventor: Marzola, Roberto
34 Via Mario Azzi
Ferrara (IT)

(74) Representative: Hirsch, Marc-Roger
34 rue de Bassano
F-75008 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention concerns a process for the cross-linking of polypropylene (PP), propylene copolymers, low-density polyethylene (LDPE) and of high density polyethylene (HDPE), ethylene/vinyl acetate copolymer (EVA), ethylene/propylene (EPM) elastomers and ethylene/propylene/diene (EPDM) elastomers, or of mixtures of above said elastomers with thermoplastic polyolefins.

It is well known that PP, LDPE, EVA polymers are excluded from certain applications since they do not meet the required rigidity and creep-resistance characteristics at high temperatures, as are required from technopolymers.

While in the case of HDPE, LPDE and EVA it is possible to overcome this drawback by means of a reticulation or cross-linking with peroxides, this is not possible in the case of PP since said polymer undergoes, in the presence of the peroxide, a degenerative process.

It is also known from French C.A. 87183 to proceed with the curing of a mixture of an olefin copolymer in the presence of a mineral filler, the mixture to be cured being obtained by a rather complicated process involving successive addition of the components in a Banbury mixer, according to a definite procedure, followed by heating and calendering in the presence of the curing compounds. This process fundamentally differs from the process according to the present invention.

The cross-linking of PP, HPDE and LPDE imparted by the carboxylic groups grafted onto the polymeric chain, and salified with metal ions, consistently improves the properties under heat of the polyolefins, such as the heat distortion temperature (HDT), the VICAT hardness, the elasticity modulus and the creep at high temperature.

Said cross-linking is conducted in the molten state in an extruder or internal mixer by the admixture of 0.01 to 10% (by weight of the starting polymeric product) of carboxylic acid in the presence or absence of organic peroxide, and by the successive addition of a salifying substance. By the term "internal mixer" hereinafter is meant an apparatus which will act on the polymeric material in the plastic state.

To produce PP, HDPE, LDPE an EVA with a very low degree of cross-linking, it will be sufficient to graft only carboxylic acid onto the polyolefin. Said operation may be carried out in an extruder or internal mixer, in the absence or presence of peroxide, depending on what type of modifier is being used.

The aim of the present invention is to carry out a process for the linking of polymers and of copolymers of alpha olefins, such as claimed in Claim 1.

The grafting onto the polyolefin occurs in the absence of peroxides or other radical generators when, as modifiers, mono- or dicarboxylic acids are used with from 7 to 12 carbon atoms, having an aromatic group with a substituent chosen from amongst the sulphonylazides or their derivatives such as monoesters and anhydrides, or mono- or dicarboxylic acids with from 7 to 12 carbon atoms, having a functional group of the benzylazide, acylazide, formylazide, phénylazide, alkylazide type of their derivatives such as, for instance, monoesters and anhydrides, or maleamic acids of the general formula given here-under, or their derivatives such as monoesters and anhydrides.

The maleamic acids used for the purpose are of the general formula:

```
        O   R1
        ||  |
CH—  C—  N—X—(Y)z
||
CH—COOH
```

wherein:

Y = a group of formula:

```
        O   R2
        ||  |
CH—  C—  N—
||
CH—COOH
```

X may be, when $z = 1$, a radical of the formula $—(CHR)_n—$, wherein n is an integer from 1 to 18, while R is H or an alkyl, or a bivalent aromatic, cycloaliphatic or heterocyclic radical while when $z = 0$, X is an aliphatic, aromatic, cycloaliphatic or heterocyclic radical containing or not containing specific functional groups such as the carboxylic, aminic, expoxidic, mercaptanic, esteric, vinylic and halogenhydric groups;

$R_1$ and $R_2$ may be hydrogen or an alkyl having from 1 to 6 carbon atoms, or they may form together a bivalent $—(CHR)_n—$ group when $X = —(CHR)_n—$.

Typical and preferred maleamic acids are:

— N-carboxymethylmaleamic acid

```
CH—CO—NH—CH2—COOH
|
CH—COOH
```

— N,N′-isophorone-bis-maleamic acid of the structure:

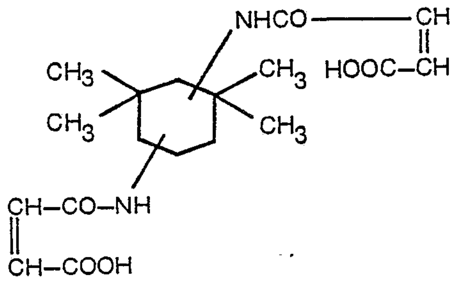

— N,N′-2,5-dimethylene-norbornane-bis-maleamic acid of the structure:

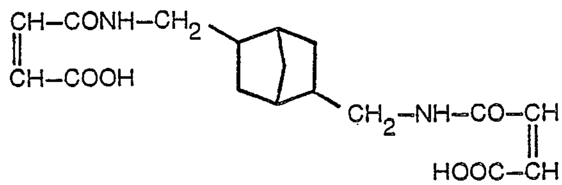

— N,N′-ethylene-bis-maleamic acid of the formula:

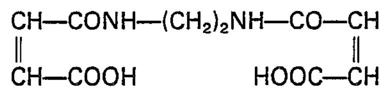

In the presence of small quantities of peroxide (0.01 to 0.5%) the unsaturated carboxylic acids listed here under may be also grafted onto the olefins. Said acids are: maleic acid, monoesters of maleic acids, maleic anhydride, fumaric acid, monoesters of fumaric acid, itaconic acid, vinylbenzoic acid, vinylphthalic acid, acrylic acid, metacrylic acid and unsaturated α,β-mono- or dicarboxylic acid containing up to 8 carbon atoms, a monoester or an anhydride of such a dicarboxylic acid.

In order to obtain polyolefins with a high degree of cross-linking, the polyolefins themselves, thus modified with carboxylic groups, must be salified with metal ions in an extruder or in an internal mixer.

The salifying substances used, are mainly: salts, oxides, alcoholates and acetylacetonates of mono-, bi- or trivalent metals.

Not all the substances do salify the grafted carboxylic groups with the same speed and with the same effectiveness, but their different and various compatibilities in the starting polymers in question involve different salification kinetics.

Particularly indicated for the polyolefins are the alcoholates, while, as regards the cations their effectiveness increases with the growing of the valency and with the decreasing size of the cation itself, especially as far as the monovalent cations are concerned.

Excellent results are achieved with trivalent cations, particularly with aluminium which is preferably used in a quantity equal to the stoechiometric quantity with respect to the carboxylic group, or in excess of such a quantity up to 100%.

The salification reaction should preferably be carried out immediately after the grafting reaction of the polyolefin, by additioning the salifying substance only a few minutes after the addition of the modifier, in the case where an external mixer is used, or by a second extrusion in the case an extruder is used.

The modifying agent, the possible radical generator and the salifying substance may be also introduced into the internal mixer or into the extruder simultaneously.

In this case the results are satisfactory only when the grafting reaction is faster than the salifying reaction or when the possible reaction between the modifying agent and the salifying agent leads to a product that is still capable of grafting itself onto the polyolefin.

Both the grafting reaction and the salifying reaction are in all events conducted at a temperature comprised between 170°C and the decomposition temperature of the polyolefin itself.

The examples given hereinafter are given by way of illustration and exemplify the present invention.

In each example is indicated the value of the melt index with reference to ASTM D 1238 standards, the creep value for bending by heat of the thermoplastic polyolefins and the melt index values and the tension or permanent deformation at 100°C with an elongation of 75% for the thermoplastic rubber made of mixes of PP and EPM.

The creep under bending, which gives the measure of the deformation under bending, is determined by subjecting an injection-molded test piece, obtained according to ASTM D 638 rules of type I by traction (pulling), placed on two supports positioned 4 cm from each other, to a bending load or stress expressed in bars in function of the cross-section of the test piece, and which is given by the formula:

$$\frac{3.\ P.\ d}{2.\ l.\ h^2} \times 0{,}981 =$$

wherein:
P = applied force in kg,
d = distance between supports
l = width of test piece
h = height of test piece

After a certain period of time of bending stress at the indicated temperature, deflection was measured. The creep-under-bending value is represented by the formula:

$$\frac{600.\ h.\ f.}{d^2}$$

wherein: f = deflection.

The "permanent deformation under tension" or "tension set" is the measure of the residual deformation in a test piece subjected to a tensile load at 100°C up to an elongation of 75% with respect to the starting value, and maintained under these conditions for 10 minutes at 100°C. The residual elongation is measured and expressed in % with respect to the initial length of the test piece.

The test piece is prepared according to ASTM D 412—66 standard, with cross-section of 1.8 × 1.8 mm and a useful length of 50 mm.

The following examples are given to illustrate practical embodiments of this invention and should not in any way be construed as limitative of the actual applicational scope of the invention itself.

Example 1

100 parts of MOPLEN X30G® (trademark of Montedison: polypropylene in granules, with a melt index L = 9), were coated with 0.2 part of vaseline, in a powder mixer, and successively coated with 0.05 part of Peroximon F® (trademark of Montedison) that is 1.3-bis(terbutylperoxyisopropyl)benzene and 0.5 part of N-carboxy-methylmaleamic acid.

Said granulate was then extruded in a double-screw Pasquetti extruder, at 190°C. 100 parts of this extruded substance (I) were then mixed together with 4 parts of a "master" consisting of 50 parts of Fertene LG1—1300® (trademark of Montedison: LDPE with melt index L = 70) and 50 parts of aluminium isopropylate, and this mixture was then extruded at 200°C, again on a Pasquetti double-screw extruder.

The resulting extruded mix (II) was then characterized as follows:

| Melt Index L | Moplén X30G 9 | Extrusion (I) 100 | Extrusion (II) 0.52 |
|---|---|---|---|
| Creep under bending at 100°C, with load of 19,6 bars and distance between supports = 4 cm, on an injection molded test piece<br><br>% deformation after 1 hour. | 1.06 | 0.96 | 0.80 |

It should be noted that PP at a melt index L = 0.35 and 0.7 respectively, when subjected to the same creep test, will show a deformation of 1.34% and 1.22% respectively.

Example 2

100 parts of MOPLEN FL20® (trademark of Montedison: PP in flakes with a melt index L = 12) were mixed together in a powder mixer with 0.05 part of Peroximon F®, 0.5 part of N-carboxymethylmaleamic acid and 4 parts of a master consisting of 50 parts of Ferten LG1—1300 and 500 parts of aluminium isopropylate. This mixture was then extruded on a Pasquetti double-screw extruder, at 190°C, and was then characterized (granulate I).

| Melt index L | Moplen FL 20 12 | Granulate I 21 |
|---|---|---|
| Creep under bending at 110°C, with load of 19,6 bars and distance between supports = 4 cm, on injection molded test pieces<br><br>% deformation after 1 hour. | 1.06 | 0.70 |

Example 3

100 parts of MOPLEN T30G® (trademark of Montedison: polypropylene in granules, with a melt index L = 2.9), 0.05 part of Peroximon F and 0.5 part of N-carboxymethylmaleamic acid were introduced into a Banbury-type internal mixer.

After 5 minutes of mixing in the Banbury, once the temperature of the molten mass had reached 180°C into the mixer 0.5 part of aluminium isopropylate were introduced and then, after a further 3 minutes, the whole mix (sample I) was discharged and characterized.

| Melt index L | Moplen T30G 2.9 | Sample I 1.5 |
|---|---|---|
| Creep under bending carried out at 110°C, under a load of 29,4 bars and distance between supports = 4 cm, on injection molded test pieces.<br><br>% deformation after 1 hour. | 1.83 | 1.40 |

Example 4

100 parts of MOPLEN X30G® and 2 parts of N-carboxymethylmaleamic acid were introduced into a Brabender-type internal mixer, operating at 200°C.

After 3 minutes, 2 parts of an aluminium sec-butylate were added and then after a further 3 minutes of mixing, Sample (I) was discharged and characterized.

| Melt index L | Moplen T30G 9 | Sample I 4.1 |
|---|---|---|
| Creep under bending carried out at 110°C, under a load of 19,6 bars and distance between supports = 4 cm, on injection molded test pieces.<br><br>% deformation after 1 hour. | 1.06 | 0.95 |

Example 5

100 parts of MOPLEN EPQ30R® (trademark of Montedison: propylene-ethylene plastic copolymer in granules; with a melt index L = 0.69 and $C_2$ content equal to 9%), 0.5 part of monoethylmaleate and 0.3 part of Peroximon F were introduced into an internal mixer of the Brabender-type, operating at 200°C.

After 3 minutes, 2 parts of aluminium isopropylate were added and thus, after a further 3 minutes of mixing, the sample was discharged and characterised.

| Melt index L | Moplen EPQ30R 0.69 | Sample I 0.10 |
|---|---|---|
| Creep under bending at 110°C, with a load of 19,6 bars and distance between the supports of 4 cm, on injection molded test pieces. % deformation after 1 hour. | 1.50 | 1.21 |

Example 6

100 parts of MOPLEN ROQG6015® (trademark of Montedison: HDPE in granules with a melt index L = 5.5) were coated with 0.2 part of vaseline in a powder mixer, and successively coated with 0.05 part of Peroximon F® and 0.1 part of N-carboxymethylmaleamic acid.

This granulate was then extruded at 190°C on a double-screw extruder, and, finally, was characterized.

100 parts of the extruded granulate (I) were then introduced into an internal mixer of the Brabender-type, operating at 190°C, together with 2 parts of aluminium isopropylate. The resulting sample (II) was then characterised.

| Melt Index L | Moplen ROQG6015 5.5 | Extrusion (I) 4.0 | Extrusion (II) 0.48 |
|---|---|---|---|
| Creep under bending at 80°C, with load of 29,4 bars and distances between the supports of 4 cm, on injection molded test pieces % deformation after 1 hour. | 1.65 | 1.60 | 1.20 |

Example 7

100 parts of MOPLEN ROQG6015® (HDPE with a melt index L equal to 5.5), 0.2 part of N,N'-isophorone-bismaleamic acid, 0.05 part of Peroximon F® and 2 parts of aluminium isopropylate were introduced into a Brabender-type internal mixer operating at 190°C.

After 4 minutes of mixing, sample (I) was discharged and characterized.

| Melt index L | Moplen ROQG6015 5.5 | Sample I 0.63 |
|---|---|---|
| Creep under bending at 80°C, with a load of 29,4 bars and distances between the supports of 4 cm, on injection molded test pieces. % deformation after 1 hour. | 1.65 | 1.23 |

Example 8

20 parts of MOPLEN X30G, 80 parts of Dutral C0034® (trademark of Montedison: ethylene/propylene copolymer with a $C_3$ content = 30%), 0.5 part of N-carboxymethylmaleamic acid and 0.12 part of Peroximon F® were introduced into an internal mixer of the Banbury type.

After 5 minutes, when the molten mass had reached 180°C the same was discharged and sample (I) characterised.

100 parts of the same sample were then introduced into an internal mixer of the Brabender type, operating at 200°C, together with 2 parts of an aluminium isopropylate.

Sample (II) was discharged after 3 minutes and then characterized.

| Melt index L | 20% Moplen X30G 80% Dutral C0034 26.67 | Sample (I) 24.40 | Sample (II) 0.68 |
|---|---|---|---|
| Tension set at 100°C with an elongation of 75%. | 75 | 75 | 10 |

Example 9

100 parts of ethylene/vinylacetate copolymer, with a vinylacetate content of 14% and a melt index L = 7.5, 3 parts of N-carboxymethylmaleamic acid and 0.05 part of Peroximon F® were introduced into a Brabender-type internal mixer operating at 190°C.

After 3 minutes operation, 2 parts of aluminium sec-butylate were added and then, after a further 3 minutes of mixing, sample (I) was discharged and characterized.

| Melt index L | EVA at 14% VAC 7.5 | Sample (I) 1 |
|---|---|---|
| Creep under bending carried out at 70°C with a load of 29,4 bars and a distance between the supports of 4 cm, on injection molded test pieces.<br>% deformation after 30 minutes. | 2.12 | 1.91 |

**Claims**

1. Process for the cross-linking of polymers and copolymers of alpha-olefins, suitable for improving the mechanical resistance characteristics under heat, said process consisting in grafting in the molten state onto the polymeric chain a carboxylic acid, through mechanical mixing at a temperature of at least 170°C of the polymeric product with the acid itself, in the presence or in the absence of a generator of radicals, and the subsequent salification at a temperature of at least 170°C of the free carboxylic groups with salifying substances consisting in mono-, bi- or trivalent metal compounds, said carboxylic acid being introduced in a quantity equal to between 0.01% and 10% by weight of the starting polymeric product and consisting in mono or dicarboxylic acids with 7 to 12 carbon atoms, maleamic acids compounds or their derivatives as well as unsaturated alpha-beta-mono or dicarboxylic acids containing up to 8 carbon atoms.

2. Process according to claim 1, characterized in that a carboxylic acid is used containing an azide group having a radical-generating function belonging to the group formed by sulfonylazide, benzylazide, formylazide, phenylazide, alkylazide or their derivatives.

3. Process according to claim 1, characterized in that a carboxylic acid is used having the general formula:

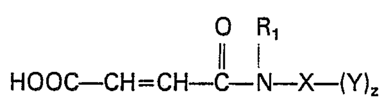

wherein:

Y = a group of formula:

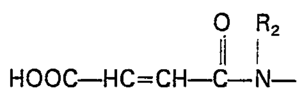

X, when z = 1, may be a radical of the formula $—(CHR)_n—$ wherein n is an integer comprised from 1 to 18, while R is H or an alkyl, or a bivalent aromatic, cycloaliphatic or heterocyclic radical, while, when z = O, X is an aliphatic, aromatic, cycloaliphatic or heterocyclic radical containing or not containing specific functional groups such as the carboxylic, aminic, epoxy, mercaptanic, esteric, vinylic and halogenhydric group;

$R_1$ and $R_2$ may be hydrogen or an alkyl having from 1 to 6 carbon atoms, or they may form together a bivalent group $—(CHR)_n$ when X = $—(CHR)_n—$.

4. Process according to claim 1, characterized in that an unsaturated carboxylic acid is used in the presence of a radical generator of the organic peroxide type.

5. Process according to any one of the preceding claims, characterized in that a basic compound of a trivalent metal is used as a salifying agent, said basic compound belonging to the group formed by salts, oxides, alcoholates and acetylacetonates.

6. Process according to claim 5, characterized in that an Al-alcoholate is used as a salifying agent.

**Patentansprüche**

1. Verfahren zum Vernetzen von Polymeren und Copolymeren von α-Olefinen, das zum Verbessern der mechanischen Beständigkeit unter Wärme geeignet ist, das darin besteht, dass man in geschmolzenem Zustand auf die polymere Kette eine Carbonsäure durch mechanisches Mischen des polymeren Produktes mit der Säure selbst bei einer Temperatur von mindestens 170°C in Anwesenheit oder Abwesenheit eines Radikalbildners aufpfropft und anschliessbend die freien Carboxylgruppen mit salzbildenden Substanzen, die aus ein-, zwei- oder dreiwertigen Metallverbindungen bestehen, bei einer Temperatur von mindestens 170°C einer Salzbildung unterwirft, wobei die Carbonsäure in einer Menge von 0,01 bis 10 Gew.-% des polymeren Ausgangsproduktes eingeführt wird und aus Mono- oder Dicarbonsäuren mit 7 bis 12 Kohlenstoffatomen, Maleinsäuremonoamidverbindungen oder deren Derivaten bzw. ungesättigen α,β-Mono- oder -Dicarbonsäuren mit bis zu 8 Kohlenstoffatomen besteht.

2. Verfahren nach Anspruch 1, dadurch gekennzeichnet, dass eine Carbonsäure verwendet wird, die eine Azidgruppe mit einer radikalbildenden Funktion, die zur Gruppe von Sulfonylazid, Benzylazid, Formylazid, Phenylazid, Alkylazid oder deren Derivaten gehört, enthält.

3. Verfahren nach Anspruch 1, dadurch gekennzeichnet, dass eine Carbonsäure mit der allgemeinen Formel

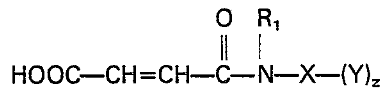

verwendet wird, worin

Y eine Gruppe der Formel

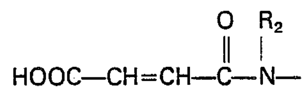 ist,

X wenn z = 1 ist, ein Rest der Formel $—(CHR)_n—$ bedeutet, worin n eine ganze Zahl zwischen 1 und 18 ist, wobei R = H oder ein Alkyl ist, oder ein zweiwertiger aromatischer, cycloaliphatischer oder heterocyclischer Rest sein kann, während, wenn z = O ist, X ein aliphatischer, aromatischer, cycloaliphatischer oder heterocyclischer Rest ist, der gegebenenfalls spezielle funktionelle Gruppen, z.B. eine Carboxyl-, Amin-, Epoxy-, Mercaptan-, Ester-, Vinyl- und Halogenwasserstofffartige Gruppe, enthalten kann;

$R_1$ und $R_2$ können Wasserstoff oder ein Alkyl mit 1 bis 6 Kohlenstoffatomen bedeuten, oder sie können zusammen eine zweiwertige Gruppe $—(CHR)_n$ bilden, wenn X = $—(CHR)_n$ ist.

4. Verfahren nach Anspruch 1, dadurch gekennzeichnet, dass die ungesättigte Carbonsäure in Anwesenheit eines Radikalbildners vom Typ eines organischen Peroxids verwendet wird.

5. Verfahren nach einem der vorhergehenden Ansprüche, dadurch gekennzeichnet, dass eine basische Verbindung eines dreiwertigen Metalls als Salzbildungsmittel verwendet wird, wobei die basische Verbindung zu der durch Salze, Oxide, Alkoholate und Acetylacetonate gebildeten Gruppe gehört.

6. Verfahren nach Anspruch 5, dadurch gekennzeichnet, dass als Salzbildungsmittel ein Al-Alkoholat verwendet wird.

**Revendications**

1. Procéde de réticulation de polymères et copolymères d'alphaoléfines convenant pour l'amélioration des caractéristiques de résistance mécanique à la chaleur, ce procédé consistant à greffer à l'état fondu sur la chaîne polymère un acide carboxylique par mélange mécanique à une température d'au moins 170°C du produit polymère avec l'acide lui-même, en présence ou en absence d'un générateur radicalaire, suivi de la salification à une température d'au moins 170°C des groupes carboxyliques libres à l'aide de substances salifiantes consistant en des composés de métaux mono-, bi- ou trivalent, cet acide carboxylique étant introduit dans des quantités comprises entre 0,01 et 10% en poids du produit polymère de départ et consistant en acides mono- et dicarboxylique comprenant 7 à 12 atomes de carbone, en acides maléamiques ou en leurs dérivés ainsi qu'en acides alpha-béta-mono ou dicarboxylique contenant jusqu'à 8 atomes de carbone.

2. Procédé selon la revendication 1, caractérisé en ce que l'acide carboxylique employé contient un groupe azide ayant une fonction génératrice de radicaux appartenant au groupe formé par sulfonylazide, benzylazide, formylazide, phénylazide, alkylazide et leurs dérivés.

3. Procédé selon la revendication 1, caractérisé en ce que l'on utilise un acide carboxylique présentant la formule générale:

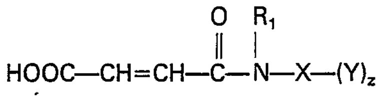

dans laquelle

Y est un groupe de formule:

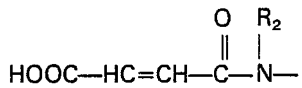

X lorsque $z = 1$, peut être un radical de formule $-(CHR)_n$ dans laquelle n est un nombre entier compris entre 1 et 18, tandis que lorsque R est un atome d'hydrogène ou un radical alkyle ou est un radical hétérocyclique, cycloaliphatique ou aromatique bivalent, tandis que lorsque $z = O$, X est un radical aliphatique, aromatique, cycloaliphatique ou hétérocyclique contenant ou ne contenant pas de groupes fonctionnels spécifiques tels que les groupes carboxylique, aminique, époxydique, mercaptanique, ester, vinylique et hydrohalogénés;

$R_1$ et $R_2$ peuvent être un atome d'hydrogène ou un radical alkyle comprenant de 1 à 6 atomes de carbone ou peuvent former ensemble un groupe bivalent $-(CHR)_n-$ lorsque $x = -(CHR)_n-$.

4. Procédé selon la revendication 1, caractérisé en ce que l'on utilise un acide carboxylique insaturé en présence d'un générateur de radicaux du type peroxyde organique.

5. Procédé selon l'une quelconque des revendications précédentes, caractérisé en ce qu'un composé basique d'un métal trivalent est utilisé en tant qu'agent salifiant, ce composé basique appartenant au groupe formé par des sels, oxydes, alcoolates et acétylacétonates.

6. Procédé selon la revendication 5, caractérisé en ce que l'on utilise en tant qu'agent salifiant un alcoolate d'aluminium.